# EUROPEAN PATENT APPLICATION

(11) **EP 4 202 109 A1**
(43) Date of publication of application: **28.06.2023**
(21) Application number: 21874186.6
(22) Date of filing: 03.09.2021
(51) Int. Cl.: D06F 39/08, D06F 23/02

(54) **CONTROL METHOD FOR FRONT-LOADING WASHING MACHINE, FRONT-LOADING WASHING MACHINE, AND COMPUTER STORAGE MEDIUM**

(30) Priority: 30.09.2020 CN 202011066569
(71) Applicant: Wuxi Little Swan Electric Co., Ltd., Wuxi, Jiangsu 214028 (CN)
(72) Inventor: JIANG, Li, Wuxi, Jiangsu 214028 (CN); XUE, Erpeng, Wuxi, Jiangsu 214028 (CN); ZHOU, Cunling, Wuxi, Jiangsu 214028 (CN); YANG, Weiguo, Wuxi, Jiangsu 214028 (CN); CUI, Yuexin, Wuxi, Jiangsu 214028 (CN); ZHOU, Wei, Wuxi, Jiangsu 214028 (CN); WANG, Jia, Wuxi, Jiangsu 214028 (CN); KANG, Fei, Wuxi, Jiangsu 214028 (CN)
(74) Representative: Whitlock, Holly Elizabeth Ann
(86) International application number: PCT/CN2021/116518
(87) International publication number: WO 2022/068525

(57) **Abstract**

A control method for a front-loading washing machine, a front-loading washing machine, and a computer storage medium. A front-loading washing machine (1800) comprises an inner drum (1820) and an outer drum (1810). The inner drum (1820) is disposed in the outer drum (1810), and water in the inner drum (1820) can overflow into the outer drum (1810). The control method comprises: injecting water into the inner drum (1820), and controlling the front-loading washing machine (1800) to start a washing operation; during the washing operation, acquiring a first water level in the outer drum (1810); and if the first water level is lower than a first water level threshold, controlling the front-loading washing machine (1800) to replenish water in the inner drum (1820). Water in the inner drum (1820) is replenished after washing has started, such that water in the inner drum (1820) can be maintained at the optimal water level, thereby effectively improving washing performance.

## Description

The present disclosure claims the priority of Chinese Patent Application No. 202011066569.X, filed with the Chinese Patent Office on September 30, 2019 and entitled "Control method for front-loading washing machine, front-loading washing machine, and computer storage medium", which is incorporated in its entirety herein by reference.

### FIELD

The present disclosure relates to the technical field of washing machines, and particularly to a control method for a drum washing machine, the drum washing machine and a computer-readable storage medium.

### BACKGROUND

In the related art, water is injected into an inner tub of a washing machine to reach a proper water level before washing. In a water injection process, clothes in the drum are less likely to fully absorb water due to a water absorption effect of the clothes. Subsequently, in a washing process, the clothes further absorb water. Accordingly, the water level of the inner tub is lower than an optimal washing water level, and a poor washing effect is rendered.

### SUMMARY

The present disclosure aims to solve at least one of the technical problems in the prior art or the related art.

In view of this, a first aspect of an embodiment of the present disclosure provides a control method for a drum washing machine.

A second aspect of an embodiment of the present disclosure provides a drum washing machine.

A third aspect of an embodiment of the present disclosure provides a computer-readable storage medium.

In order to realize the above objectives, an embodiment of the first aspect of the present disclosure provides a control method for a drum washing machine. The drum washing machine includes an inner tub and an outer tub, the inner tub is arranged within the outer tub, and water in the inner tub may overflow into the outer tub. The control method includes: injecting water into the inner tub, and controlling the drum washing machine to start executing washing work; obtaining a first water level in the outer tub in a washing work process; and controlling the drum washing machine to replenish water to the inner tub under the condition that the first water level is less than a first water level threshold.

In an embodiment of the control method provided in the present disclosure, the drum washing machine includes the inner tub and the outer tub, and the inner tub is arranged within the outer tub. In a washing process of the drum washing machine, in order to ensure that there is sufficient water in the inner tub, water is injected into the inner tub first, and meanwhile, the drum washing machine is controlled to execute the washing work. As water keeps being injected into the inner tub, the water in the inner tub starts overflowing after reaching a certain amount. Since the water in the inner tub may overflow into the outer tub, a water level of the outer tub starts rising. Therefore, the drum washing machine may indirectly determine a current water level of the inner tub according to an obtained current water level of the outer tub, to control the water level of the inner tub. The water level of the outer tub during washing work is called a first water level. If the water level of the outer tub reaches a first water level threshold, it is indicated that there is a sufficient amount of water in the inner tub, it is not required to inject water to add a water amount, and washing may be normally carried out. If the first water level is less than the first water level threshold, it is indicated that little water overflows from the inner tub into the outer tub, the water level in the inner tub is relatively low, and the water level of the inner tub may not generate a desirable washing effect of the washing work. Therefore, the drum washing machine should replenish water to the inner tub until the first water level reaches the first water level threshold. By obtaining the first water level of the outer tub to control water injection for the inner tub, water may be reasonably injected into the inner tub.

The drum washing machine dynamically controls the water level in the inner tub by obtaining the first water level in the outer tub. No matter the weight of clothes put in the inner tub, and no matter what the materials of the clothes put in the inner tub are, it is always ensured that the water level of the inner tub is the water level corresponding to the first water level threshold of the outer tub, and the water level in the inner tub may be kept at an optimal water level during washing work.

According to embodiments of the present disclosure, after washing is started, water is supplied to the inner tub and the water level of the inner tub may be kept at the optimal water level, and a washing effect is effectively improved.

In addition, the control method for a drum washing machine in the above solution provided in the present disclosure may further have additional technical features as follows:

In the above embodiment, the inner tub of the drum washing machine is a non-porous inner tub. Before controlling the drum washing machine to carry out washing work, the control method for a drum washing machine further includes: controlling the outer tub to discharge water, and obtaining a second water level in the outer tub after the water is discharged; and determining the sum of the second water level and a preset constant as a second water level threshold. The step of injecting water into the inner tub specifically includes: starting to inject water into the inner tub, and obtaining a third water level in the outer tub in a water injection process; and stopping the injection of water into the inner tub under the condition that the third water level is greater than the second water level threshold.

In the embodiment, the inner tub of the drum washing machine is a non-porous inner tub. Compared with a drum washing machine with a perforated inner tub, there is no hole for water to directly pass through between the inner tub and the outer tub. Before the washing work is carried out, the drum washing machine completely discharges the water from the outer tub first. Since the inner tub is a non-porous inner tub, complete water discharge from the outer tub may not affect water injection for the inner tub. After the water in the outer tub is discharged, the water level of the outer tub is the second water level. If the water of the outer tub may be completely discharged, the second water level is 0. If some water is left in the outer tub due to a relatively high position of a water outlet pipe of the drum washing machine or for other reasons, the second water level is greater than 0. After the water in the outer tub is completely discharged, water starts being injected into the inner tub. As the drum washing machine keeps injecting water into the inner tub, after the water level of the inner tub rises to a certain height, the water in the inner tub starts overflowing into the outer tub. When the water in the inner tub overflows outwards, the water level of the water in the outer tub starts rising. In this case, the water level of the outer tub is the third water level. When the water level of the outer tub is greater than the second water level threshold, the drum washing machine stops injecting water into the inner tub. In this case, it is determined that the water level of the inner tub reaches a height corresponding to the second water level threshold, and the water in the inner tub satisfies a water amount required for washing. The second water level threshold is equal to the sum of the second water level and a preset constant. The preset constant is a water level rise amount of the outer tub due to overflow of the water in the inner tub. By setting the preset constant, a reasonable amount of water may be injected into the inner tub before the drum washing machine carries out the washing work.

Since there is no hole for water to pass through between the non-porous inner tub and the outer tub, the drum washing machine with the non-porous inner tub may determine a water level situation in the inner tub by obtaining the third water level formed by water overflowing from the inner tub to the outer tub before washing work. Therefore, the water in the inner tub reaches a reasonable water level, water resources are saved, and it is ensured that there is a sufficient amount of water in a subsequent washing work process.

In the above embodiment, during the injection of water into the inner tub, the control method for a drum washing machine further includes: controlling the inner tub to spin relative to the outer tub.

In the embodiment, before the washing work is started, when water is injected into the inner tub, the inner tub is controlled to spin relative to the outer tub. Since the inner tub spins and an inner wall of the inner tub is not provided with a hole for leaking water, water in the inner tub is spun onto the inner wall of the inner tub due to centrifugal force, and the water level of the inner tub is declined. In an actual washing process, the inner tub is in a spin state. Therefore, if the inner tub does not spin relative to the outer tub before the washing work is started, the water level of the inner tub is the water level of the inner tub in a static state. When the drum washing machine starts the washing work, the inner tub is in a spin state. Therefore, if the inner tub does not spin before the washing work is started, the water in the inner tub starts overflowing before a sufficient amount of water is injected into the inner tub. Therefore, before the washing work is started, the drum washing machine controls the inner tub to spin relative to the outer tub, and it is ensured that a sufficient amount of water may be injected into the inner tub before the washing work is started, and there may be sufficient water in the inner tub during washing work.

In the above embodiment, the second water level threshold is less than the first water level threshold.

In the embodiment, the second water level threshold is the water level threshold of the outer tub before the drum washing machine carries out washing work, and in this case, if excessive water is injected into the inner tub, water resources may be wasted, a detergent in the water may be diluted, and a washing effect may be affected. After the drum washing machine starts the washing work, since some of the water may be absorbed by clothes, it is required to keep a sufficient amount of water in the inner tub. In this case, the water level of the inner tub should be higher than that before the washing work. Correspondingly, the first water level threshold should be greater than the second water level threshold. Therefore, the first water level threshold is greater than the second water level threshold, and it is ensured that there is a sufficient amount of water in the inner tub in a whole washing process of the drum washing machine.

In the above embodiment, during controlling the drum washing machine to execute washing work, the control method for a drum washing machine further includes: starting time measurement; and performing the step of obtaining a first water level in the outer tub under the condition that time measurement duration is greater than or equal to a duration threshold.

In the embodiment, when the drum washing machine starts the washing work, water in the inner tub is absorbed by clothes, resulting in decline in water level in the inner tub. If the water level declines excessively, a washing effect of the clothes may be affected. However, the clothes do not complete absorbing water in an instant, and gradually reach a saturation state along with the washing work. After absorbing water to reach the saturation state, the clothes absorb no more water, and decline of the water level of the inner tub caused by water absorption of the clothes may not occur. Therefore, when the drum washing machine executes washing work, time measurement is started. When the time measurement duration is greater than or equal to the duration threshold, whether a water absorption process of the clothes is ended is determined. In this case, the drum washing machine obtains the first water level to replenish water to the inner tub. It can be understood that by setting the duration threshold of time measurement of the drum washing machine, water replenish efficiency may be improved. The situation that since water keeps being supplied, the water in the inner tub keeps overflowing to dilute a detergent, and affecting a washing effect is avoided.

In the above embodiment, work modes of the drum washing machine include a wash mode, a rinse mode and a dewatering mode, and in the wash mode, the controlling the drum washing machine to replenish water to the inner tub is executed.

In the embodiment, the work modes of the drum washing machine include the wash mode, the rinse mode and the dewatering mode. It can be understood that whether there is a sufficient amount of water in the inner tub in the wash mode has a direct influence on a washing effect. The effect of the other two modes, especially the dewatering mode, is relatively less related to a water amount of the inner tub. Therefore, the control method for a drum washing machine controls water replenish to the inner tub in the wash mode and it is ensured that there is a sufficient amount of water in the wash mode, and waste of water resources is avoided. Further, an overall washing effect of the drum washing machine is optimized, and water is saved.

In the above embodiment, after the controlling the drum washing machine to replenish water to the inner tub, the control method further includes: stopping replenishing water to the inner tub under the condition that the first water level is greater than the first water level threshold.

In the embodiment, after the washing work is started and the time measurement duration is greater than or equal to the duration threshold, the drum washing machine starts water replenish. In a subsequent washing work process, the drum washing machine stops replenishing water to the inner tub when finding the first water level of the inner tub being greater than the first water level threshold. In this way, dilution of a detergent in the water caused by excessive water replenish may be avoided, waste of water resources may be reduced, and water may be saved.

An embodiment of the second aspect of the present disclosure provides a drum washing machine.

The drum washing machine provided according to an embodiment of the second aspect of the present disclosure includes: a memory, configured to store a computer program; and a processor for implementing the control method for a drum washing machine when executing the computer program.

In an embodiment of the drum washing machine in the present disclosure, the drum washing machine includes the processor and the memory. Since the processor may execute a computer program or an instruction stored in the memory and implement any one of the control methods of the first aspect when executing the computer program or the instruction, the drum washing machine in the present disclosure has all the beneficial effects of the control method in any one of the above embodiments, which will not be repeated herein.

In the above embodiment, the drum washing machine further includes: an outer tub, where a water level sensor is arranged within the outer tub; and an inner tub rotatably arranged inside the outer tub, where water in the inner tub may overflow into the outer tub. The inner tub is a non-porous inner tub.

In the embodiment, the drum washing machine includes the outer tub and the inner tub, where the inner tub is arranged within the outer tub and may relatively spin in the outer tub. The water level sensor is arranged within the outer tub, and water in the inner tub may overflow into the outer tub and the water level of the outer tub may be changed. The water level sensor is arranged within the outer tub and the water level of the outer tub may be obtained. Since the water in the inner tub overflows to form the water in the outer tub, the water level of the inner tub may be reversely inferred according to the water level of the outer tub. The water level of the inner tub may be controlled according to the water level of the outer tub.

An embodiment of the third aspect of the present disclosure provides a computer-readable storage medium.

The computer-readable storage medium stores a computer program, and the computer program may implement a control method for a drum washing machine when executed by a processor.

In an embodiment of the computer-readable storage medium in the present disclosure, the computer-readable storage medium stores the computer program, and the computer program implements steps of the control method in any of the above embodiments when executed by a processor, and the computer-readable storage medium has all the beneficial effects of the control method in any of the above embodiments, which will not be repeated herein.

Additional aspects and advantages of the present disclosure will become obvious in the following description, or may be learned by practice of the present disclosure.

### BRIEF DESCRIPTION OF THE DRAWINGS

Fig. 1 shows a schematic flowchart of a control method for a drum washing machine according to an embodiment of the present disclosure;
Fig. 2 shows a schematic flowchart of a control method for a drum washing machine according to another embodiment of the present disclosure;
Fig. 3 shows a schematic flowchart of a control method for a drum washing machine according to yet another embodiment of the present disclosure;
Fig. 4 shows a schematic flowchart of a control method for a drum washing machine according to yet another embodiment of the present disclosure;
Fig. 5 shows a schematic flowchart of a control method for a drum washing machine according to yet another embodiment of the present disclosure;
Fig. 6 shows a schematic flowchart of a control method for a drum washing machine according to yet another embodiment of the present disclosure;
Fig. 7 shows a schematic flowchart of a control method for a drum washing machine according to yet another embodiment of the present disclosure;
Fig. 8 shows a schematic flowchart of a control method for a drum washing machine according to yet another embodiment of the present disclosure;
Fig. 9 shows a schematic flowchart of a control method for a drum washing machine according to yet another embodiment of the present disclosure;
Fig. 10 shows a schematic flowchart of a control method for a drum washing machine according to yet another embodiment of the present disclosure;
Fig. 11 shows a schematic flowchart of a control method for a drum washing machine according to yet another embodiment of the present disclosure;
Fig. 12 shows a schematic flowchart of a control method for a drum washing machine according to yet another embodiment of the present disclosure;
Fig. 13 shows a schematic flowchart of a control method for a drum washing machine according to yet another embodiment of the present disclosure;
Fig. 14 shows a schematic flowchart of a control method for a drum washing machine according to yet another embodiment of the present disclosure;
Fig. 15 shows a schematic flowchart of a control method for a drum washing machine according to still another embodiment of the present disclosure;
Fig. 16 shows a schematic structural diagram of a drum washing machine according to an embodiment of the present disclosure.

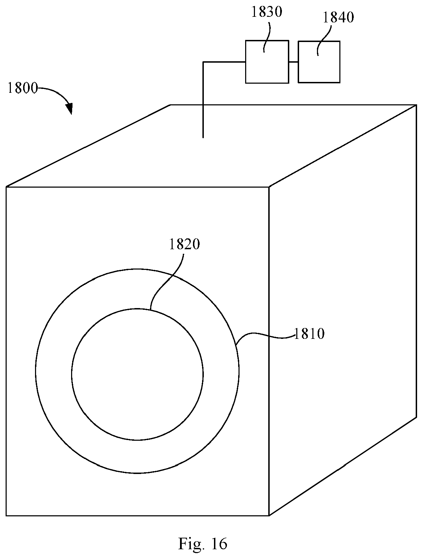

Corresponding relations between reference numerals in Fig. 16 and component names are as follows:
1800-drum washing machine, 1810-outer tub, 1820-inner tub, 1830-memory, and 1840-processor.

### DETAILED DESCRIPTION OF THE INVENTION

In order to more clearly understand the above objectives, features and advantages of embodiments of the present disclosure, the embodiments of the present disclosure will be further described in detail below in combination with accompanying drawings and particular implementation modes. It should be noted that embodiments of the present disclosure and features in the embodiments can be combined with one another if there is no conflict.

Many specific details are set forth in the following description to facilitate full understanding of the present disclosure, but embodiments of the present disclosure can also be implemented in other ways different from those described herein, and therefore the scope of protection of the present disclosure is not limited by the particular embodiments disclosed below.

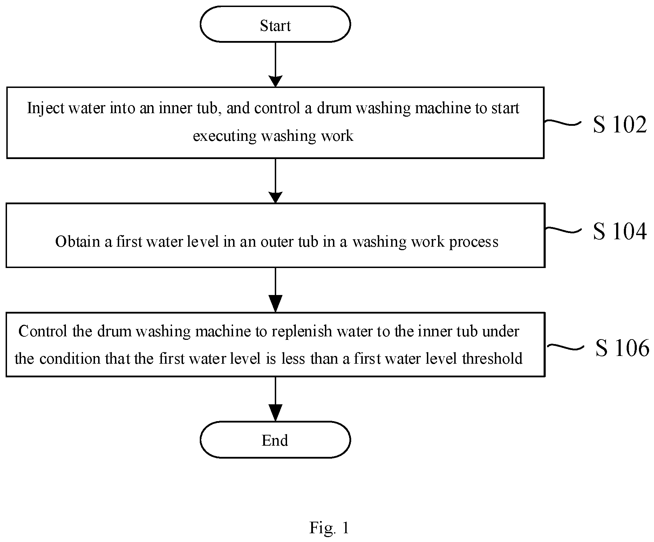

A control method for a drum washing machine, the drum washing machine and a computer-readable storage medium according to some embodiments of the present disclosure will be described below with reference to Figs. 1-16.

### Embodiment 1

As shown in Fig. 1, an embodiment of the present disclosure provides a control method for a drum washing machine. The drum washing machine includes an inner tub and an outer tub, the inner tub is arranged within the outer tub, and water in the inner tub may overflow into the outer tub. The control method includes:
step S102: inject water into the inner tub, and control the drum washing machine to start executing washing work;
step S104: obtain a first water level in the outer tub in a washing work process; and
step S 106: control the drum washing machine to replenish water to the inner tub under the condition that the first water level is less than a first water level threshold.

The drum washing machine includes the inner tub and the outer tub, and the inner tub is arranged within the outer tub. In a washing process of the drum washing machine, in order to ensure that there is sufficient water in the inner tub, water is injected into the inner tub first, and meanwhile, the drum washing machine is controlled to execute the washing work. As water keeps being injected into the inner tub, the water in the inner tub starts overflowing after reaching a certain amount. Since the water in the inner tub may overflow into the outer tub, a water level of the outer tub may start rising. Therefore, the drum washing machine may indirectly determine a current water level of the inner tub according to an obtained current water level of the outer tub, to control the water level of the inner tub. The water level of the outer tub during washing work is called a first water level. If the water level of the outer tub reaches a first water level threshold, it is indicated that there is a sufficient amount of water in the inner tub, it is not required to inject water to add a water amount, and washing may be normally carried out. If the first water level is less than the first water level threshold, it is indicated that little of water overflows from the inner tub into the outer tub, the water level in the inner tub is relatively low, and the water level of the inner tub may not generate a desirable washing effect of the washing work. Therefore, the drum washing machine should replenish water to the inner tub in time until the first water level reaches the first water level threshold. By obtaining the first water level of the outer tub to control water injection for the inner tub, water may be reasonably injected into the inner tub.

The drum washing machine dynamically controls the water level in the inner tub by obtaining the first water level in the outer tub. No matter how the weight of clothes put in the inner tub changes, and no manner how different materials of the clothes put in the inner tub are, it is always ensured that the water level of the inner tub is the water level corresponding to the first water level threshold of the outer tub, and the water level in the inner tub may be kept at an optimal water level during washing work, and a washing effect is improved.

According to embodiments of the present disclosure, after washing is started, water is supplied to the inner tub and the water level of the inner tub may be kept at the optimal water level, and a washing effect is effectively improved.

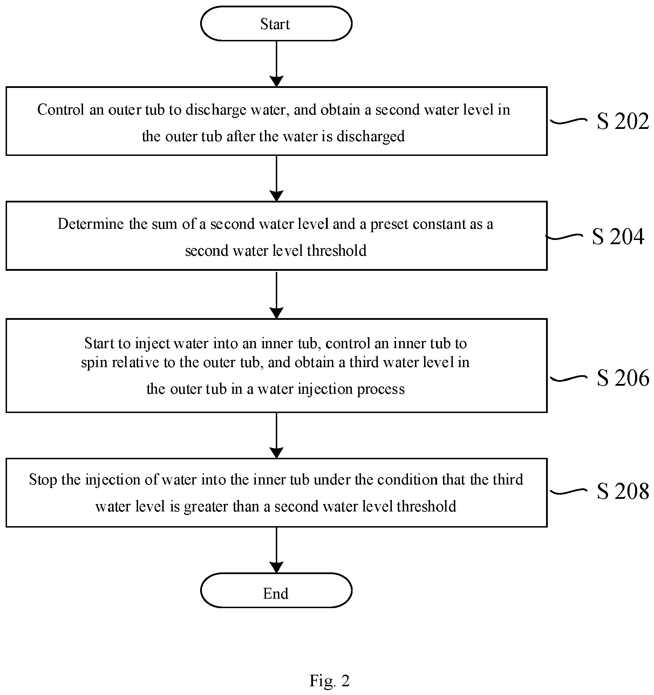

As shown in Fig. 2, in another embodiment of the present disclosure, the drum washing machine includes an inner tub and an outer tub, the inner tub is arranged within the outer tub, water in the inner tub may overflow into the outer tub, and the inner tub of the drum washing machine is a non-porous inner tub. Before the washing work is started, steps of the control method for a drum washing machine specifically includes:
step S202: control the outer tub to discharge water, and obtain a second water level in the outer tub after the water is discharged;
step S204: determine the sum of the second water level and a preset constant as a second water level threshold;
step S206: start to inject water into the inner tub, control the inner tub to spin relative to the outer tub, and obtain a third water level in the outer tub in a water injection process; and
step S208: stop the injection of water into the inner tub under the condition that the third water level is greater than the second water level threshold.

Compared with a drum washing machine with a perforated inner tub, there is no hole for water to directly pass through between the inner tub and the outer tub.

Before the washing work is carried out, the drum washing machine completely discharges the water from the outer tub first. Since the inner tub is a non-porous inner tub, complete water discharge from the outer tub may not affect water injection for the inner tub. After the water in the outer tub is completely discharged, the water level of the outer tub is the second water level. If the water of the outer tub may be completely discharged, the second water level is 0. If some water is left in the outer tub due to a relatively high position of a water outlet pipe of the drum washing machine or for other reasons, the second water level is greater than 0. After the water in the outer tub is completely discharged, water starts being injected into the inner tub.

The inner tub is controlled to spin relative to the outer tub while water is injected into the inner tub. Since the inner tub spins and an inner wall of the inner tub is not provided with a hole for leaking water, water in the inner tub is spun onto the inner wall of the inner tub due to centrifugal force, and the water level of the inner tub is declined. In an actual washing process, the inner tub is in a spin state. Therefore, if the inner tub does not spin relative to the outer tub before the washing work is started, the water level of the inner tub is the water level of the inner tub in a static state. When the drum washing machine starts the washing work, the inner tub is in a spin state. Therefore, if the inner tub does not spin before the washing work is started, the water in the inner tub starts overflowing before a sufficient amount of water is injected into the inner tub. Therefore, before the washing work is started, the drum washing machine controls the inner tub to spin relative to the outer tub, and it is ensured that a sufficient amount of water may be injected into the inner tub before the washing work is started, and there may be sufficient water in the inner tub during washing work.

As the drum washing machine keeps injecting water into the inner tub, after the water level of the inner tub rises to a certain height, the water in the inner tub starts overflowing into the outer tub. When the water in the inner tub overflows outwards, the water level of the water in the outer tub starts rising. In this case, the water level of the outer tub is the third water level. When the water level of the outer tub is greater than the second water level threshold, the drum washing machine stops injecting water into the inner tub. In this case, it is determined that the water level of the inner tub reaches a height corresponding to the second water level threshold, and the water in the inner tub satisfies a water amount required for washing. The second water level threshold is equal to the sum of the second water level and a preset constant. The preset constant is a water level rise amount of the outer tub due to overflow of the water in the inner tub. By setting the preset constant, a reasonable amount of water may be injected into the inner tub before the drum washing machine carries out the washing work.

In some implementation modes, the preset constant is an empirical value, and the preset constant may be determined according to a relation between a water amount of the inner tub and a water level of the outer tub obtained through repeated experiments before the washing machine is delivered, and is pre-stored in a storage medium of the washing machine.

In some other modes, the preset constant may be determined according to a wash mode of the washing machine. The wash mode includes a fabric type and a weight of clothes to be washed, a corresponding detergent type, and a preset washing program, such as a spin speed of the inner tub, a spin-to-stop ratio and a wash temperature. According to different wash modes, different preset constants may be set, to satisfy water replenish requirements in different washing situations.

Since there is no hole for water to pass through between the non-porous inner tub and the outer tub, the drum washing machine with the non-porous inner tub may determine a water level situation in the inner tub by obtaining the third water level formed by water overflowing from the inner tub to the outer tub before washing work. Therefore, the water in the inner tub reaches a reasonable water level, water resources are saved, and it is ensured that there is a sufficient amount of water in a subsequent washing work process.

The second water level threshold is the water level threshold of the outer tub before the drum washing machine carries out washing work. In this case, if excessive water is injected into the inner tub, water resources may be wasted, a detergent in the water may be diluted, and a washing effect may be affected. After the drum washing machine starts the washing work, since some of the water may be absorbed by clothes, it is required to keep a sufficient amount of water in the inner tub, and in this case the water level of the inner tub should be higher than that before the washing work. Correspondingly, the first water level threshold should be greater than the second water level threshold. Therefore, the first water level threshold is greater than the second water level threshold, and it is ensured that there is a sufficient amount of water in the inner tub in a whole washing process of the drum washing machine.

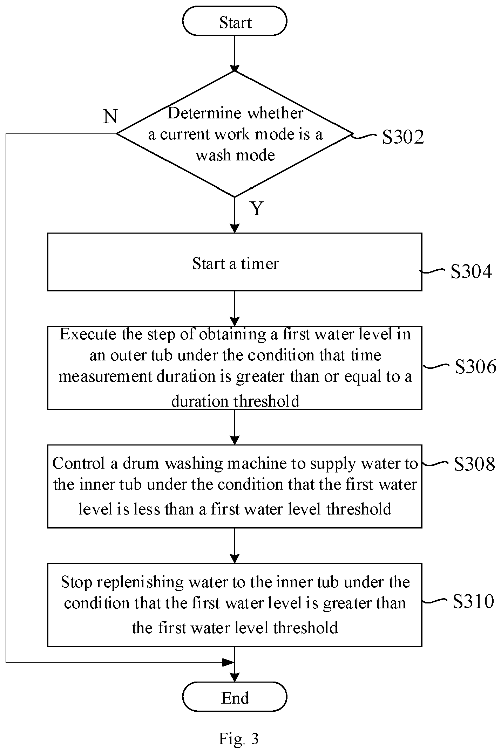

As shown in Fig. 3, in another embodiment of the present disclosure, the drum washing machine includes an inner tub and an outer tub, the inner tub is arranged within the outer tub, and water in the inner tub may overflow into the outer tub. Steps of the control method for a drum washing machine include:
step S302: determine whether a current work mode is a wash mode, if yes, execute step S304, and if not, end the control method;
step S304: start a timer;
step S306: execute the step of obtaining a first water level in the outer tub under the condition that time measurement duration is greater than or equal to a duration threshold;
step S308: control the drum washing machine to replenish water to the inner tub under the condition that a first water level is less than a first water level threshold; and
step S310: stop replenishing water to the inner tub under the condition that the first water level is greater than the first water level threshold.

The work modes of the drum washing machine include a wash mode, a rinse mode and a dewatering mode. It can be understood that whether there is a sufficient amount of water in the inner tub in the wash mode has a direct influence on a washing effect. The effect of the other two modes, especially the dewatering mode, is relatively less related to a water amount of the inner tub. Therefore, the control method for a drum washing machine controls water replenish to the inner tub in the wash mode and it is ensured that there is a sufficient amount of water in the wash mode, and waste of water resources is avoided. Further, an overall washing effect of the drum washing machine is optimized, and water is saved.

In an embodiment of the present disclosure, when the drum washing machine starts the washing work, water in the inner tub is absorbed by clothes, resulting in decline in water level in the inner tub. If the water level declines excessively, a washing effect of the clothes may be affected. However, the clothes do not complete absorbing water in an instant, and gradually reach a saturation state along with the washing work. After absorbing water to reach the saturation state, the clothes absorb no more water, and decline of the water level of the inner tub caused by water absorption of the clothes may not occur. Therefore, when the drum washing machine executes washing work, time measurement is started. When the time measurement duration is greater than or equal to the duration threshold, whether a water absorption process of the clothes is ended is determined. In this case, the drum washing machine obtains the first water level to replenish water to the inner tub. It can be understood that by setting the duration threshold of time measurement of the drum washing machine, water replenish efficiency may be improved. The situation that since water keeps being supplied, the water in the inner tub keeps overflowing to dilute a detergent, and affecting a washing effect is avoided.

According to the embodiment, after the washing work of the drum washing machine is started, and the time measurement duration is greater than or equal to the duration threshold, water replenish is started. In a subsequent washing work process, the drum washing machine stops replenishing water to the inner tub when finding the first water level of the inner tub being greater than the first water level threshold. In this way, dilution of a detergent in the water caused by excessive water replenish may be avoided, waste of water resources may be reduced, and water may be saved.

### Embodiment 2

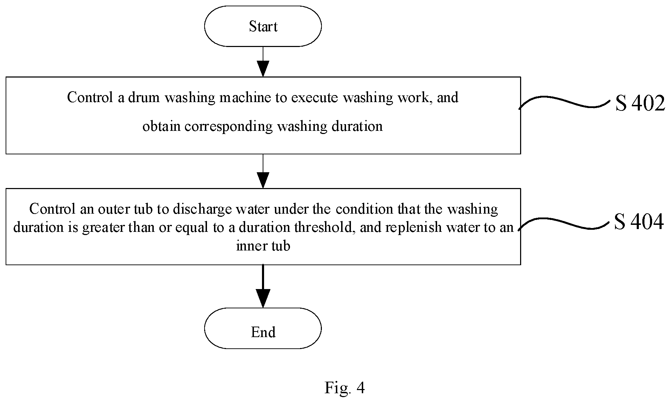

As shown in Fig. 4, an embodiment of the present disclosure provides a control method for a drum washing machine. The drum washing machine includes an inner tub and an outer tub, the inner tub is arranged within the outer tub, and water in the inner tub may overflow into the outer tub. It can be understood that a tub wall of the inner tub is not provided with a communication hole, and the inner tub is not in communication with the outer tub by the communication hole. After water is injected into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

In addition, the control method includes:
step S402: control a drum washing machine to execute washing work, and obtain corresponding washing duration; and
step S404: control an outer tub to discharge water under the condition that the washing duration is greater than or equal to a duration threshold, and replenish water to an inner tub.

It can be understood that by setting the duration threshold, after the washing duration is greater than or equal to the duration threshold, that is, after a period of washing work, the washing machine is controlled to carry out water replenish work, to ensure that a water amount of the inner tub may still satisfy an optimal water level of the washing work after the clothes fully absorb the water, and a washing effect is ensured.

Specifically, since the inner tub spins in a washing process, some water in the inner tub may be splashed into the outer tub, resulting in water level rise of the outer tub. Therefore, before water replenish work is carried out, water in the outer tub is discharged first and the water level of the outer tub may return to an initial water level. Thus, in a process of replenishing water to the inner tub, the situation that the initial water level of the outer tub is changed due to water splashed out of the inner tub in a washing process may be avoided, and whether water replenish to the inner tub is ended may be determined according to the water level of the outer tub.

In a case that water stored in the outer tub may be completely discharged, a default water level is a 0 water level.

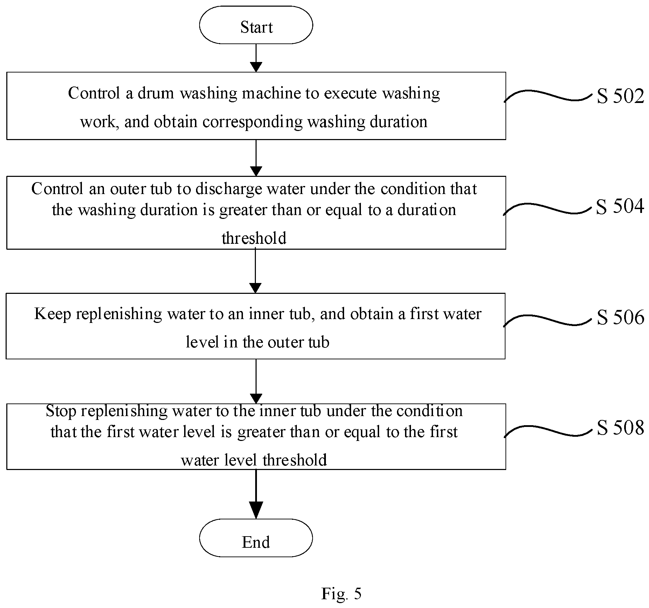

As shown in Fig. 5, an embodiment of the present disclosure provides a control method for a drum washing machine. Specifically, the control method includes:
step S502: control a drum washing machine to execute washing work, and obtain corresponding washing duration;
step S504: control an outer tub to discharge water under the condition that the washing duration is greater than or equal to a duration threshold;
step S506: keep replenishing water to an inner tub, and obtain a first water level in the outer tub; and
step S508: stop replenishing water to the inner tub under the condition that the first water level is greater than or equal to the first water level threshold.

After water keeps being supplied to the inner tub, the water in the inner tub starts overflowing outwards after reaching a certain height, the water overflowing outwards enters the outer tub, a first water level in the outer tub is obtained, and when the first water level is greater than or equal to a first water level threshold, it is inferred that there is a sufficient amount of water in the inner tub, that is, a water amount reaches the standard, and water replenish to the inner tub is stopped. It can be understood that by obtaining the water level in the outer tub, when to stop water replenish in a water replenish process is determined. The solution may save more water than a fixed water replenish procedure. Compared with a traditional mode that an inner tub and an outer tub are in communication with each other by a communication hole, a water level sensor is arranged within the outer tub, and a change is relatively small, and clothes may be fully wetted through a water replenish operation.

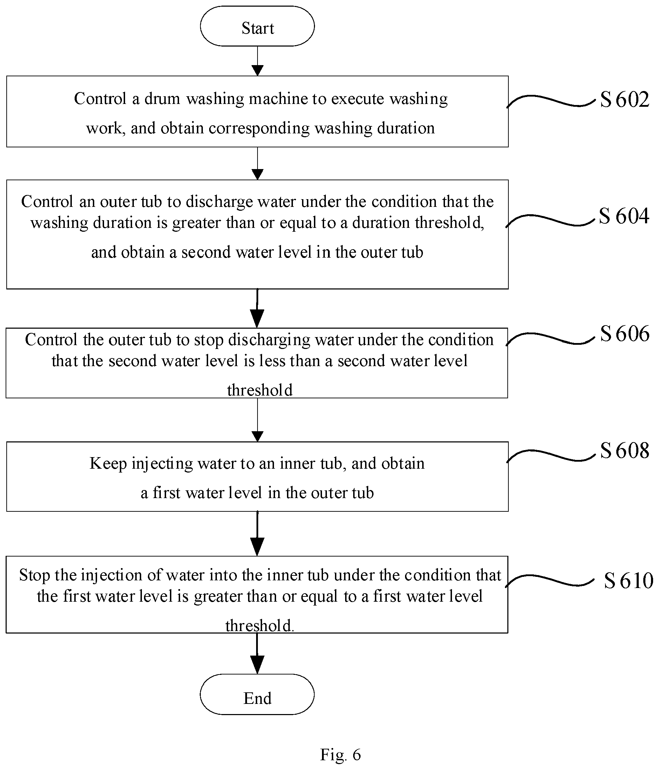

As shown in Fig. 6, an embodiment of the present disclosure provides a control method for a drum washing machine. Specifically, the control method includes:
step S602: control a drum washing machine to execute washing work, and obtain corresponding washing duration;
step S604: control an outer tub to discharge water under the condition that the washing duration is greater than or equal to a duration threshold, and obtain a second water level in the outer tub;
step S606: control the outer tub to stop discharging water under the condition that the second water level is less than a second water level threshold;
step S608: keep injecting water into an inner tub, and obtain a first water level in the outer tub; and
step S610: stop the injection of water into the inner tub under the condition that the first water level is greater than or equal to a first water level threshold.

It can be understood that by setting the duration threshold, after the washing duration is greater than or equal to the duration threshold, water replenish work is carried out. This method may solve the problem of when to replenish water, that is, whether to replenish water.

The outer tub is controlled to discharge water, and a second water level in the outer tub is obtained. When the second water level is less than the second water level threshold, water discharge from the outer tub is stopped. Then, water is supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is arranged within the outer tub, and a change is relatively small, and clothes may be fully wetted through a water replenish operation.

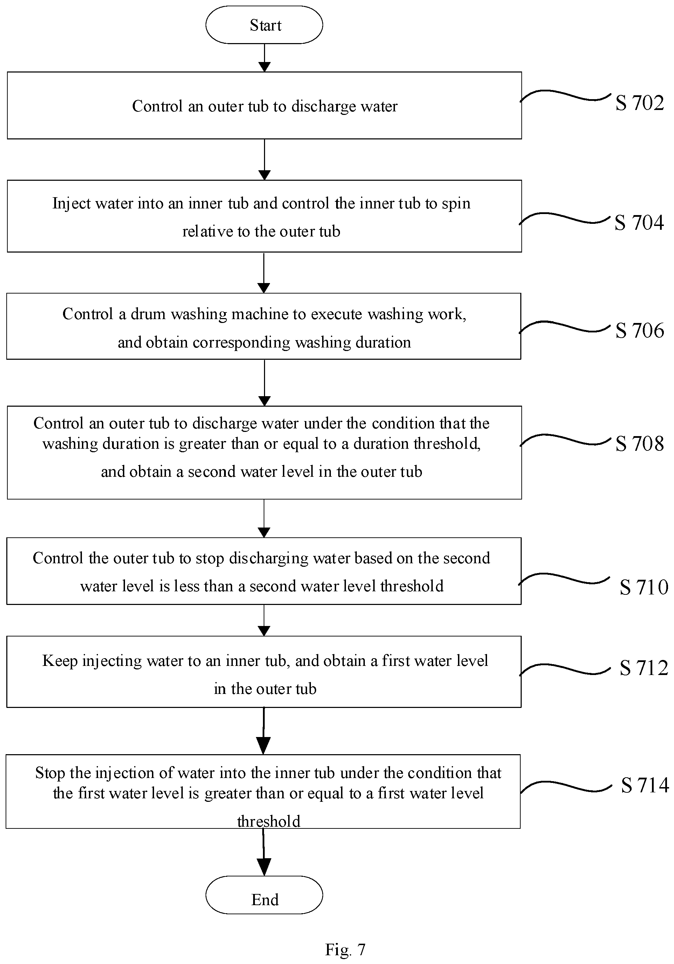

As shown in Fig. 7, an embodiment of the present disclosure provides a control method for a drum washing machine. Specifically, the control method includes:
step S702: control an outer tub to discharge water;
step S704: inject water into an inner tub, and control the inner tub to spin relative to the outer tub;
step S706: control a drum washing machine to execute washing work, and obtain corresponding washing duration;
step S708: control an outer tub to discharge water under the condition that the washing duration is greater than or equal to a duration threshold, and obtain a second water level in the outer tub;
step S710: control the outer tub to stop discharging water under the condition that the second water level is less than a second water level threshold;
step S712: keep injecting water into an inner tub, and obtain a first water level in the outer tub; and
step S714: stop the injection of water into the inner tub under the condition that the first water level is greater than or equal to a first water level threshold.

It can be understood that by setting the duration threshold, after the washing duration is greater than or equal to the duration threshold, water replenish work is carried out. This method may solve the problem of when to replenish water, that is, whether to replenish water.

Before the drum washing machine is controlled to execute washing work, water in the outer tub is discharged once, that is, it is ensured that the water left in the outer tub in a previous washing process is completely discharged, and this washing process may not be influenced by the previous washing process. When water is injected into the inner tub, the inner tub is controlled to spin relative to the outer tub and clothes in the inner tub may be fully wetted.

The outer tub is controlled to discharge water, and a second water level in the outer tub is obtained. When the second water level is less than the second water level threshold, water discharge from the outer tub is stopped. Then, water is supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is arranged within the outer tub, and a change is relatively small, and clothes may be fully wetted through a water replenish operation.

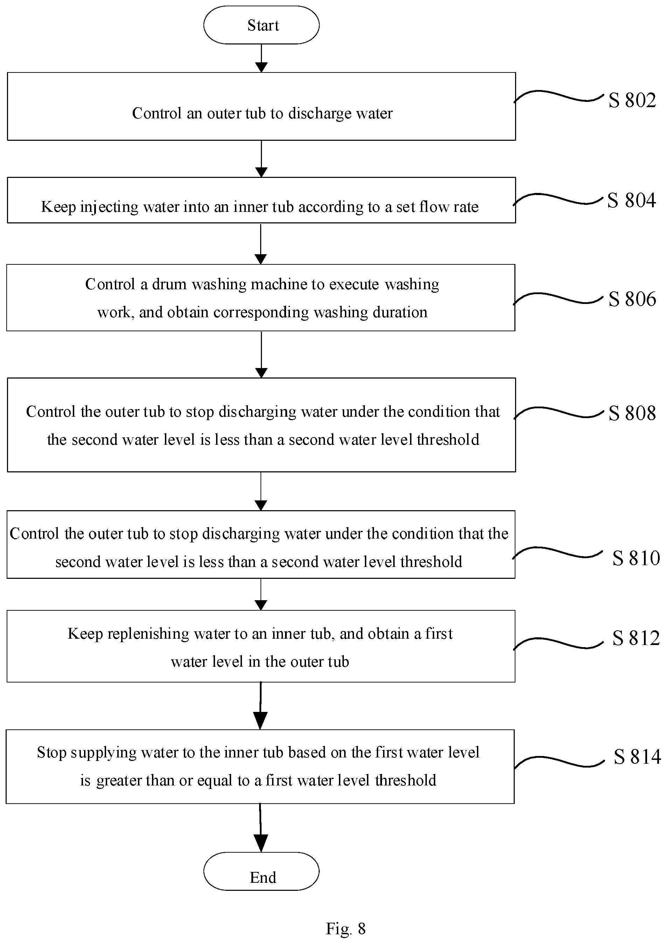

As shown in Fig. 8, an embodiment of the present disclosure provides a control method for a drum washing machine. Specifically, the control method includes:
step S802: control an outer tub to discharge water;
step S804: keep injecting water into an inner tub according to a set flow rate;
step S806: control a drum washing machine to execute washing work, and obtain corresponding washing duration;
step S808: control an outer tub to discharge water under the condition that the washing duration is greater than or equal to a duration threshold, and obtain a second water level in the outer tub;
step S810: control the outer tub to stop discharging water under the condition that the second water level is less than a second water level threshold;
step S812: keep replenishing water to an inner tub, and obtain a first water level in the outer tub; and
step S814: stop replenishing water to the inner tub under the condition that the first water level is greater than or equal to a first water level threshold.

In an embodiment of the present disclosure, work modes of the drum washing machine include a wash mode, a rinse mode and a dewatering mode, that is, the drum washing machine has a corresponding washing function, rinsing function and dehydrating function. In the wash mode, the step of controlling the drum washing machine to replenish water to the inner tub is executed, in other words, water is supplied to the inner tub at intervals in a washing process. Since water is fed into the washing machine before washing is started, and in the water feeding process, it is not ensured that the clothes completely absorb water, that is, the clothes are completely in a wetted state, in the washing process, the water level of the inner tub may be declined due to further water absorption of the clothes, and quantitative water replenish after a period of time may ensure a washing effect.

Specifically, by setting the duration threshold, after the washing duration is greater than or equal to the duration threshold, water replenish work is carried out. This method may solve the problem of when to replenish water, that is, whether to replenish water. It can be understood that by setting the duration threshold, after the washing duration is greater than or equal to the duration threshold, water replenish work is carried out. This method may solve the problem of when to replenish water, that is, whether to replenish water.

Before the drum washing machine is controlled to execute washing work, water in the outer tub is discharged once, that is, it is ensured that the water left in the outer tub in a previous washing process is completely discharged, and this washing process may not be influenced by the previous washing process. Since the step of controlling the inner tub to spin relative to the outer tub is before the step of injecting water into the inner tub, it can be understood that no relative spin occurs between the inner tub and the outer tub before the water is injected into the inner tub. When the water is injected into the inner tub or after the water is injected for a period of time, the inner tub and the outer tub may relatively spin, that is, washing is started.

The outer tub is controlled to discharge water, and a second water level in the outer tub is obtained. When the second water level is less than the second water level threshold, water discharge from the outer tub is stopped. Then, water is supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

Specifically, according to the first water level threshold being greater than the second water level threshold, when to start and stop water replenish work may be determined, to ensure normal operation of water replenish.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is arranged within the outer tub, and a change is relatively small, and clothes may be fully wetted through a water replenish operation.

The water keeps being injected into the inner tub according to a set flow rate, that is, in a water injection process, a flow rate is limited and the water injection process may be effectively controlled, insufficient water injection or excessive water injection caused by a sharp change of a flow rate is avoided, and a water saving effect may be achieved on the premise that a water injection amount satisfies requirements.

### Embodiment 3

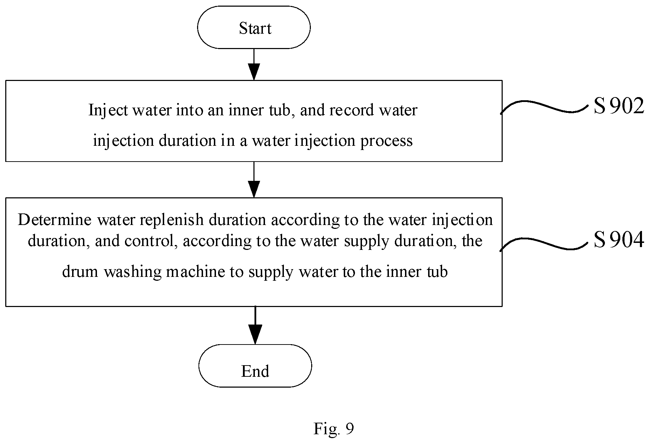

As shown in Fig. 9, an embodiment of the present disclosure provides a control method for a drum washing machine. The drum washing machine includes an inner tub. The control method includes:
step S902: inject water into an inner tub, and record water injection duration in a water injection process; and
step S904: determine water replenish duration according to the water injection duration, and control, according to the water replenish duration, the drum washing machine to replenish water to the inner tub.

In the embodiment, a water amount required for washing clothes this time is determined according to first water feeding duration, and water replenish duration in a washing process is determined according to the water injection duration, and water may be quantitatively supplied according to a set program.

With water supplied quantitatively according to a determined water replenish amount in a washing process, when clothes with different materials and different weights are washed, a water amount of the inner tub may always satisfy the optimal washing requirement, and a washing effect is better.

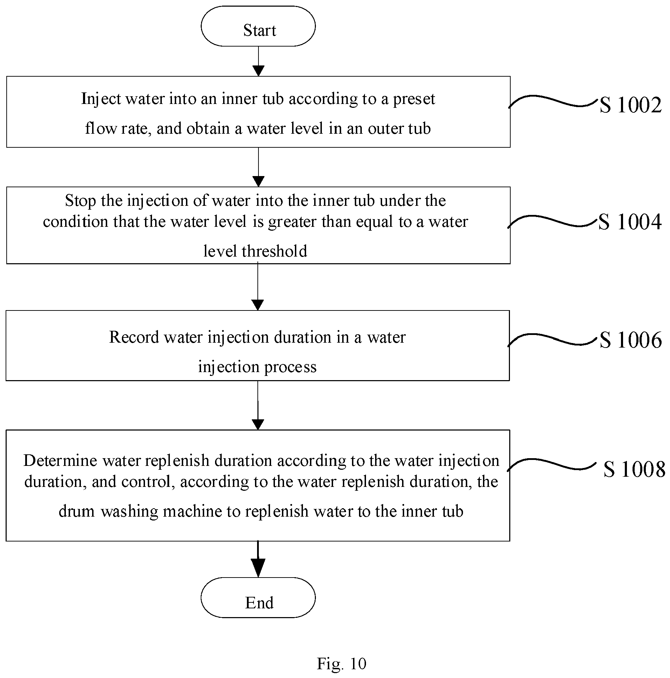

As shown in Fig. 10, in an embodiment of the present disclosure, the drum washing machine includes an inner tub and an outer tub, the inner tub is a non-porous inner tub, that is, a tub wall of the inner tub is not provided with a communication hole, the non-porous inner tub is arranged within the outer tub, and water in the non-porous inner tub may overflow into the outer tub. It can be understood that the inner tub is not in communication with the outer tub by the communication hole, and after water is injected into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

Specifically, the control method for a drum washing machine includes:
step S1002: inject water into an inner tub according to a preset flow rate, and obtain a water level in an outer tub;
step S1004: stop the injection of water into the inner tub under the condition that the water level is greater than equal to a water level threshold;
step S1006: record water injection duration in a water injection process; and
step S1008: determine water replenish duration according to the water injection duration, and control, according to the water replenish duration, the drum washing machine to replenish water to the inner tub.

In an embodiment of the present disclosure, water is injected into the inner tub first according to a preset flow rate, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water injection for the inner tub is stopped, and total water injection duration in the water injection process is recorded.

A water amount required for washing clothes this time is determined according to first water feeding duration, and water replenish duration in a washing process is determined according to the water injection duration, and water may be quantitatively supplied according to a set program.

By carrying out water replenish according to a determined water replenish amount in a washing process, when clothes made of different materials and having different weight are washed, the water amount of the inner tub may always satisfy the optimal washing requirement, and a washing effect is better.

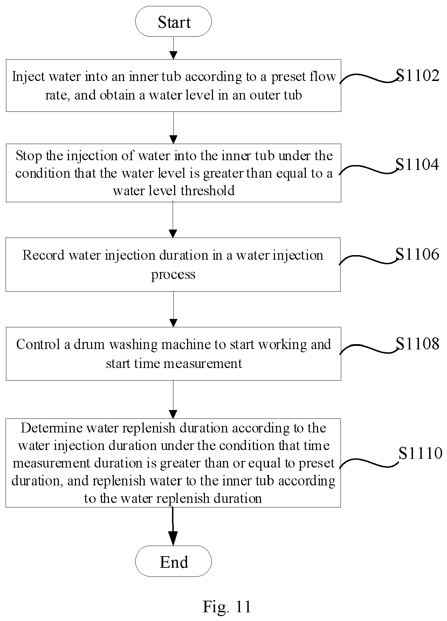

As shown in Fig. 11, an embodiment of the present disclosure provides a control method for a drum washing machine. Specifically, the control method includes:
step S1102: inject water into an inner tub according to a preset flow rate, and obtain a water level in an outer tub;
step S1104: stop the injection of water into the inner tub under the condition that the water level is greater than or equal to a water level threshold;
step S1106: record water injection duration in a water injection process;
step S1108: control a drum washing machine to start working and start time measurement; and
step S1110: determine water replenish duration according to the water injection duration under the condition that time measurement duration is greater than or equal to preset duration, and replenish water to the inner tub according to the water replenish duration.

Water is injected into the inner tub first according to a preset flow rate, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water injection for the inner tub is stopped, and total water injection duration in the water injection process is recorded.

Then, the drum washing machine is controlled to start working and start time measurement, in order words, water is injected into the inner tub before the washing machine washes the clothes, and it is ensured that the clothes may absorb some water.

Water replenish duration is determined according to water injection duration, and according to the water replenish duration, the drum washing machine is controlled to replenish water to the inner tub. A water amount required for washing clothes this time is determined according to first water feeding duration, and water replenish duration in a washing process is determined according to the water injection duration, and water may be quantitatively supplied according to a set program.

Then, under the condition that time measurement duration is greater than or equal to preset duration, the step of replenishing water to the inner tub according to water injection duration is executed, that is, water is supplied to the inner tub after a period of time, and it is ensured that the clothes completely absorbs water, that is, the clothes are in a completely wetted state, and a washing effect is better.

Since the step S1108 of controlling a drum washing machine to start working and start time measurement is before the step S1110 of determining water replenish duration according to the water injection duration, and under the condition that time measurement duration is greater than or equal to preset duration, replenishing water to the inner tub according to the water replenish duration, after the washing machine starts washing work, a processor starts determining water replenish duration and then computes a specific value of a water replenish amount.

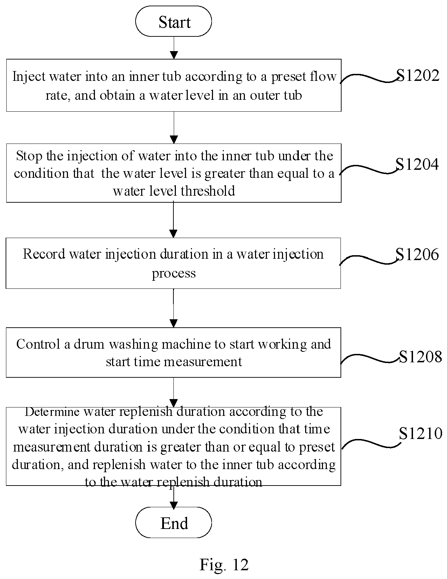

In some embodiments of the present disclosure, as shown in Fig. 12, the control method for a drum washing machine includes:
step S1202: inject water into an inner tub according to a preset flow rate, and obtain a water level in an outer tub;
step S1204: stop the injection of water into the inner tub under the condition that the water level is greater than equal to a water level threshold;
step S1206: record water injection duration in a water injection process;
step S1208: control a drum washing machine to start working and start time measurement; and
step S1210: determine water replenish duration according to the water injection duration under the condition that time measurement duration is greater than or equal to preset duration, and replenish water to the inner tub according to the water replenish duration.

A water amount required for washing clothes this time is determined according to first water feeding duration, water replenish duration in a washing process is determined according to the water injection duration, and after a specific value of a water replenish amount is computed, the washing machine is started to carry out washing work.

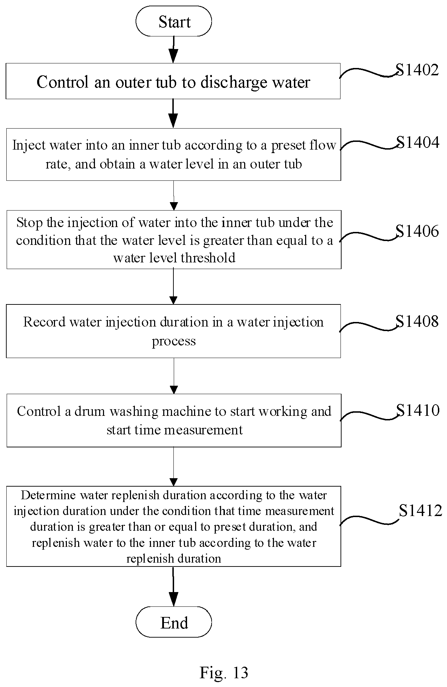

As shown in Fig. 13, an embodiment of the present disclosure provides a control method for a drum washing machine. Specifically, the control method includes:
step S 1402: control an outer tub to discharge water;
step S1404: inject water into an inner tub according to a preset flow rate, and obtain a water level in an outer tub;
step S1406: stop the injection of water into the inner tub under the condition that the water level is greater than equal to a water level threshold;
step S1408: record water injection duration in a water injection process;
step S1410: control a drum washing machine to start working and start time measurement; and
step S1412: determine water replenish duration according to the water injection duration under the condition that time measurement duration is greater than or equal to preset duration, and replenish water to the inner tub according to the water replenish duration.

Before water is injected into the inner tub, the outer tub is controlled to discharge water, that is, it is ensured that the water left in the outer tub in a previous washing process is completely discharged, and this washing process may not be influenced by the previous washing process.

In addition, before the water is injected into the inner tub, the inner tub is controlled to spin relative to the outer tub, in other words, before the water is injected into the inner tub, the inner tub and the outer tub do not spin relative to each other.

Water is injected into the inner tub according to a preset flow rate, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water injection for the inner tub is stopped, and total water injection duration in the water injection process is recorded.

Then, the drum washing machine is controlled to start working and start time measurement, in order words, water is injected into the inner tub before the washing machine washes the clothes, and it is ensured that the clothes may absorb some water.

Water replenish duration is determined according to water injection duration, and according to the water replenish duration, the drum washing machine is controlled to replenish water to the inner tub. A water amount required for washing clothes this time is determined according to first water feeding duration, and water replenish duration in a washing process is determined according to the water injection duration, and water may be quantitatively supplied according to a set program.

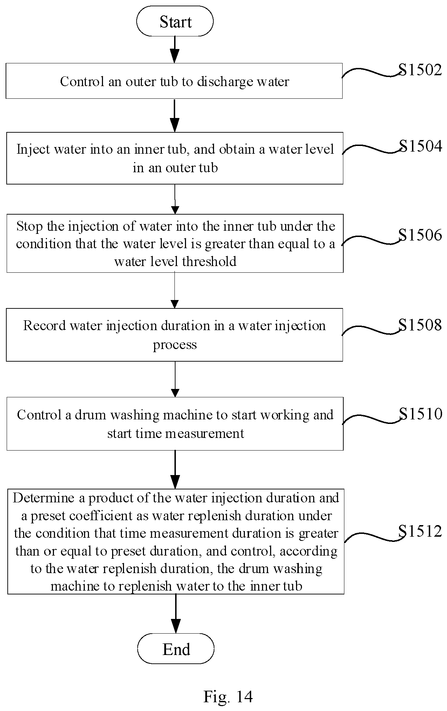

As shown in Fig. 14, in an embodiment of the present disclosure, specifically, the control method includes:
step S1502: control an outer tub to discharge water;
step S1504: inject water into an inner tub, and obtain a water level in the outer tub;
step S1506: stop the injection of water into the inner tub under the condition that the water level is greater than equal to a water level threshold;
step S1508: record water injection duration in a water injection process;
step S 1510: control a drum washing machine to start working and start time measurement; and
step S1512: determine a product of the water injection duration and a preset coefficient as water replenish duration under the condition that time measurement duration is greater than or equal to preset duration, and control, according to the water replenish duration, the drum washing machine to replenish water to the inner tub.

Before water is injected into the inner tub, the outer tub is controlled to discharge water, that is, it is ensured that the water left in the outer tub in a previous washing process is completely discharged, and this washing process may not be influenced by the previous washing process.

In addition, before the water is injected into the inner tub, the inner tub is controlled to spin relative to the outer tub, in other words, before the water is injected into the inner tub, the inner tub and the outer tub do not spin relative to each other.

Water is injected into the inner tub, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water injection for the inner tub is stopped, and total water injection duration in the water injection process is recorded.

Then, the drum washing machine is controlled to start working and start time measurement, in order words, water is injected into the inner tub before the washing machine washes the clothes, and it is ensured that the clothes may absorb some water.

Water replenish duration is determined according to water injection duration, and according to the water replenish duration, the drum washing machine is controlled to replenish water to the inner tub. A water amount required for washing clothes this time is determined according to first water feeding duration, and water replenish duration in a washing process is determined according to the water injection duration, and water may be quantitatively supplied according to a set program.

After the water injection duration is obtained, the water injection duration is multiplied by a preset coefficient to determine the water replenish duration. Since the flow rate of water feed in unit time is fixed, the amount of water supplied each time is fixed, in other words, in the washing process, water may be quantitatively supplied to the inner tub at intervals.

Specifically, the preset coefficient is a constant greater than 0 and less than 1. In the case of the preset coefficient being greater than 0, it is ensured that quantitative water replenish may be carried out on the inner tub at intervals. In the case of the preset coefficient being less than 1, it is ensured that a water replenish amount is not greater than an initial water injection amount, and waste of water is avoided.

In some implementation modes, the preset coefficient is an empirical value, and the preset coefficient may be determined according to a ratio relation between a required water replenish amount and an initial water injection amount obtained through repeated experiments before the washing machine is delivered, and is prestored in a storage medium of the washing machine.

In some other modes, the preset coefficient may be determined according to a wash mode of the washing machine, and the wash mode includes a fabric type and a weight of clothes to be washed, a corresponding detergent type, and a preset washing program, such as a spin speed of the inner tub, a spin-to-stop ratio and a washing temperature. According to different wash modes, different preset coefficients may be set, to satisfy water replenish requirements in different washing situations.

### Embodiment 4

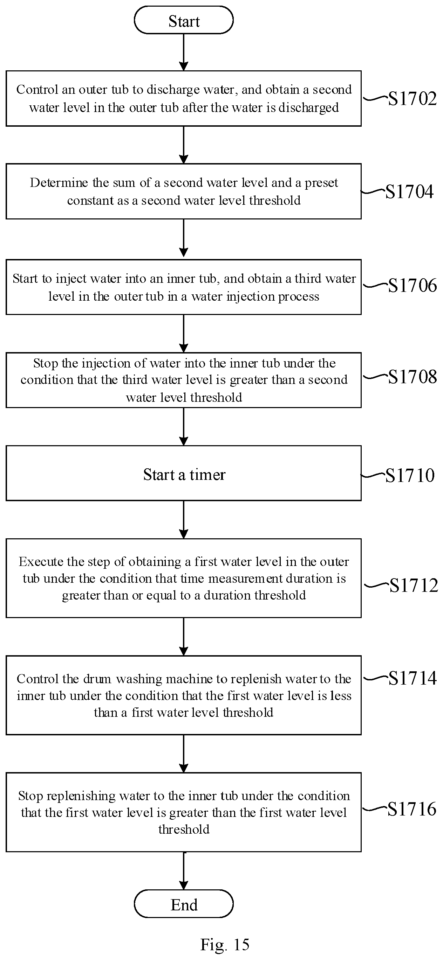

As shown in Fig. 15, a complete embodiment of the present disclosure provides a control method for a drum washing machine. The drum washing machine includes an inner tub and an outer tub, the inner tub is arranged within the outer tub, the inner tub is a non-porous inner tub, and water in the inner tub may overflow into the outer tub. A water level sensor is arranged within the outer tub to sense a current water level of the outer tub. In a drum washing machine with a non-porous inner tub, a front end of the inner tub is provided with a clothes entrance, which is not completely sealed. When water is supplied for the inner tub to a certain amount, the water in the inner tub may overflow.

Steps of the control method for a drum washing machine specifically includes:
step S 1702: control the outer tub to discharge water, and obtain a second water level in the outer tub after the water is discharged;
step S 1704: determine the sum of the second water level and a preset constant as a second water level threshold;
step S1706: start to inject water into an inner tub, and obtain a third water level in the outer tub in a water injection process;
step S 1708: stop the injection of water into the inner tub under the condition that the third water level is greater than the second water level threshold;
step S1710: start a timer;
step S1712: execute the step of obtaining a first water level in the outer tub under the condition that time measurement duration is greater than or equal to a duration threshold;
step S 1714: control the drum washing machine to replenish water to the inner tub under the condition that the first water level is less than a first water level threshold; and
step S1716: stop replenishing water to the inner tub under the condition that the first water level is greater than the first water level threshold.

Before the drum washing machine starts a washing process, through the control method for a drum washing machine, the water in the outer tub is discharged first, and the water level of the outer tub obtained by the drum washing machine at the moment is recorded as h0, that is, the second water level. Since the inner tub is a non-porous inner tub, complete water discharge from the outer tub may not affect water injection for the inner tub. If the water of the outer tub may be completely discharged, the second water level is 0. If some water is left in the outer tub due to a relatively high position of a water outlet pipe of the drum washing machine or for other reasons, the second water level is greater than 0.

After the water in the outer tub is completely discharged, water starts being injected into the inner tub. When water is injected into the inner tub, the inner tub is required to be controlled to spin relative to the outer tub, and a water absorption speed of clothes in the drum is accelerated, the clothes in the inner tub are quickly soaked, and it is ensured that a water injection level is less affected by a water absorption process of the clothes. When the water in the inner tub increases to a certain extent, the water starts overflowing. The water level of the outer tub starts rising. In this case, the water level of the outer tub is h0, that is, the second water level. As water keeps being injected into the inner tub, the water level of the water overflowing from the inner tub to the outer tub is gradually increased, and the water level of the outer tub keeps being increased. In this case, the water level of the outer tub is h0+Δh, that is, a third water level, where △h is an increased water level of the outer tub.

The inner tub of the drum washing machine is a non-porous inner tub. Compared with a drum washing machine with a perforated inner tub, there is no hole for water to directly pass through between the inner tub and the outer tub. Before the washing work is carried out, the drum washing machine completely discharges the water from the outer tub first. Since the inner tub is a non-porous inner tub, complete water discharge from the outer tub may not affect water injection for the inner tub. After the water in the outer tub is completely discharged, the water level of the outer tub is h0. If the water of the outer tub may be completely discharged, h0 is 0. If due to a relatively high position of a water outlet pipe of the drum washing machine or for other reasons, there is still some residual water in the outer tub, h0 is greater than 0. After the water in the outer tub is completely discharged, water starts being injected into the inner tub. As the drum washing machine keeps injecting water into the inner tub, after the water level of the inner tub rises to a certain height, the water in the inner tub starts overflowing into the outer tub. When the water in the inner tub overflows outwards, the water level of the water in the outer tub starts rising. In this case, the water level of the outer tub is h0+Δh. When the water level of the outer tub is greater than the second water level threshold, the drum washing machine stops injecting water into the inner tub. In this case, it is determined that the water level of the inner tub reaches a height corresponding to the second water level threshold, and the water in the inner tub satisfies a water amount required for washing. The second water level threshold is equal to the sum of h0 and a preset constant. The preset constant is a water level rise amount of the outer tub due to overflow of the water in the inner tub. By setting the preset constant, a reasonable amount of water may be injected into the inner tub before the drum washing machine carries out the washing work.

Since there is no hole for water to pass through between the non-porous inner tub and the outer tub, the drum washing machine with the non-porous inner tub may determine a water level situation in the inner tub by obtaining h0+Δh formed by water overflowing from the inner tub to the outer tub before washing work. Therefore, the water in the inner tub reaches a reasonable water level, water resources are saved, and it is ensured that there is a sufficient amount of water in a subsequent washing work process.

After the water level sensor arranged on the outer tub senses that the water amount of the outer tub reaches the water level h0+h, water feed is stopped, where h is a preset constant, and h0+h is a second water level threshold. When h0+Δh is greater than h0+h, water feed of the inner tub is stopped. The drum washing machine may determine that there is a sufficient amount of water in the inner tub currently, water injection for the inner tub is not required, and subsequent washing work may be started.

In this case, the drum washing machine starts a timer to start measuring time of the washing work. The reason is that when the drum washing machine starts the washing work, water in the inner tub is absorbed by clothes, resulting in decline in water level in the inner tub. If the water level declines excessively, a washing effect of the clothes may be affected. However, the clothes do not complete absorbing water in an instant, and gradually reach a saturation state along with the washing work. After absorbing water to reach the saturation state, the clothes absorb no more water, and decline of the water level of the inner tub caused by water absorption of the clothes may not occur. Therefore, when the drum washing machine executes washing work, time measurement is started. When the washing work is carried out for 15 min, the drum washing machine obtains h0+Δh. Since the drum washing machine is in a washing work state, in this case, the h0+△h is the first water level. H0+△h is compared with H, that is, a first water level threshold. If h0+△h<H, it is required to replenish water to the inner tub, otherwise, it is not required to replenish water to the inner tub until h0+△h≥H.

In a washing process of the drum washing machine, in order to ensure that there is sufficient water in the inner tub, water is injected into the inner tub first, and meanwhile, the drum washing machine is controlled to execute the washing work. In a washing work process, the drum washing machine may obtain the water level from the outer tub. The drum washing machine may indirectly determine a current water level of the inner tub according to an obtained current water level of the outer tub, to control the water level of the inner tub. In the washing process of the drum washing machine, the water is driven by the inner tub due to spin of the inner tub, and some water is spun onto an inner wall of the inner tub by centrifugal force, and in the situation of the same water amount, the water level of the inner tub is different from the water level during non-washing work. Therefore, in the situation of the same water amount in the inner tub, the amount of water overflowing to the outer tub is also different from the amount of water overflowing during non-washing work, and finally the water level formed in the outer tub is different from the water level during non-washing work. The water level of the outer tub during washing work is called a first water level. If the first water level is less than the first water level threshold, it is indicated that little of water overflows from the inner tub into the outer tub, the water level in the inner tub is relatively low, and the water level of the inner tub may not generate a desirable washing effect of the washing work. Therefore, the drum washing machine should replenish water to the inner tub in time until the first water level reaches the first water level threshold. In this case, the water level in the inner tub may fully wet the clothes, and an optimal washing effect is achieved. The drum washing machine dynamically controls the water level in the inner tub by obtaining the first water level in the outer tub. No matter how the weight of clothes put in the inner tub is changed, and no manner how different materials of the clothes put in the inner tub are, it is always ensured that the water level of the inner tub is the water level corresponding to the first water level threshold of the outer tub, and the water level in the inner tub may be kept at the optimal water level during washing work, the problem of influence on the water level of the inner tub caused by water absorption of different materials of the clothes is solved, and waste of water resources caused by excessive water injection is avoided.

### Embodiment 5

As shown in Fig. 16, an embodiment of the present disclosure provides a drum washing machine 1800 including a memory 1830 and a processor 1840. The memory 1830 is configured to store a computer program. The processor 1840 is used for implementing the control method for a drum washing machine 1800 when executing the computer program. By keeping quantitatively replenishing water in a washing process, loads having different weights and made of different materials may be satisfied, that is, clothes may be fully wetted, and a washing effect is better.

In addition, the drum washing machine 1800 further includes an outer tub 1810 and an inner tub 1820. The inner tub 1820 is a non-porous inner tub 1820, the inner tub 1820 is rotatably arranged inside the outer tub 1810, and water in the inner tub 1820 may overflow into the outer tub 1810. It can be understood that the inner tub 1820 is not in communication with the outer tub 1810 by the communication hole, and after water is injected into the inner tub 1820, the water in the inner tub 1820 starts overflowing outwards after reaching a certain height, and the water overflowing outwards enters the outer tub 1810. This washing machine structure has the advantages that clothes are only washed in the inner tub 1820, and the clothes are prevented from being polluted by dirt between the inner tub and the outer tub 1810, and a washing effect is better.

### Embodiment 6

An embodiment of the present disclosure provides a computer-readable storage medium, and the computer program may implement a control method for a drum washing machine when executed by a processor. A water amount required for washing clothes this time is determined according to first water feeding duration, and water replenish duration in a washing process is determined according to the water injection duration, and water may be quantitatively supplied according to a set program.

In the present disclosure, terms "first", "second" and "third" are merely used for a descriptive purpose and cannot be understood as indicating or implying relative importance. Term "plurality of" refers to two or above, unless explicitly defined otherwise. Terms "installation", "mutual connection", "connection", "fixation", etc. should be understood in a broad sense. For example, "connection" can be a fixed connection, a detachable connection or an integrated connection; and "mutual connection" can be a direct connection or an indirect connection by an intermediary. For those of ordinary skill in the art, the specific meanings of the above terms in the present disclosure can be understood according to specific circumstances.

In the description of the present disclosure, it should be understood that orientation or positional relations indicated by terms "up", "down", "left", "right", "front", "rear", etc. are based on orientation or positional relations shown in accompanying drawings, are merely for facilitating the description of the present disclosure and simplifying the description, rather than indicating or implying that a device or unit referred to must have a particular orientation or be constructed and operated in a particular orientation, and therefore cannot be understood as limiting the present disclosure.

In the description, terms "an embodiment", "some embodiments", "particular embodiments", etc. mean that a specific feature, structure, material or characteristic described in combination with the embodiment or example is included in at least one embodiment or example of the present disclosure. In the description, the schematic expressions of the above terms do not certainly refer to the same embodiment or example. Moreover, the specific features, structures, materials or characteristics described can be combined in a suitable manner in any one or more embodiments or examples.

What are described above are merely preferred embodiments of the present disclosure, and are not intended to limit the present disclosure, and various modifications and changes can be made on the present disclosure by those skilled in the art. Any modification, equivalent substitution, improvement, etc. within the spirit and principles of the present disclosure should fall within the scope of protection of the present disclosure.

## Claims

1. A control method for a drum washing machine, wherein the drum washing machine comprises an inner tub and an outer tub, the inner tub is arranged within the outer tub, such that water in the inner tub overflows into the outer tub; and the control method comprises: injecting water into the inner tub, and controlling the drum washing machine to start executing washing work; obtaining a first water level in the outer tub in a washing work process; and controlling the drum washing machine to replenish water to the inner tub under the condition that the first water level is less than a first water level threshold.

2. The control method for a drum washing machine according to claim 1, wherein the inner tub is a non-porous inner tub; before controlling the drum washing machine to execute washing work, the control method further comprises: controlling the outer tub to discharge water, and obtaining a second water level in the outer tub after the water is discharged; and determining the sum of the second water level and a preset constant as a second water level threshold; and the step of injecting water into the inner tub specifically comprises: starting to inject water into the inner tub, and obtaining a third water level in the outer tub in a water injection process; and stopping the injection of water into the inner tub under the condition that the third water level is greater than the second water level threshold.

3. The control method for a drum washing machine according to claim 2, wherein during the injection of water into the inner tub, the control method further comprises: controlling the inner tub to spin relative to the outer tub.

4. The control method for a drum washing machine according to claim 2, wherein the second water level threshold is less than the first water level threshold.

5. The control method for a drum washing machine according to any one of claims 1 to 4, wherein during controlling the drum washing machine to execute a washing work, the control method further comprises: starting a timer; and performing the step of obtaining the first water level in the outer tub under the condition that the duration of the timer is greater than or equal to a duration threshold.

6. The control method for a drum washing machine according to claim 5, wherein the operation modes of the drum washing machine comprise a wash mode, a rinse mode and a dewatering mode, and performing the step of the controlling the drum washing machine to replenish water to the inner tub during the wash mode.

7. The control method for a drum washing machine according to claim 5, wherein after controlling the drum washing machine to replenish water to the inner tub, the control method further comprises: stopping the water replenish to the inner tub under the condition that the first water level is greater than the first water level threshold.

8. A drum washing machine, comprising: a memory, configured to store a computer program; and a processor, configured to execute the computer program to implement the control method for a drum washing machine of any one of claims 1 to 7.

9. The drum washing machine according to claim 8, further comprising: an outer tub with a water level sensor; and an inner tub rotatably arranged inside the outer tub, such that water in the inner tub overflows into the outer tub; wherein the inner tub is a non-porous inner tub.

10. A computer-readable storage medium, with a computer program stored thereon, wherein the computer program is executed by a processor, the control method for a drum washing machine of any one of claims 1 to 7 is implemented.
